# EUROPÄISCHE PATENTSCHRIFT

(11) **EP 0 643 653 B1**
(45) Veröffentlichungstag und Bekanntmachung des Hinweises auf die Patenterteilung: **12.06.1996**
(21) Anmeldenummer: 94911075.3
(22) Anmeldetag: 24.03.1994
(51) Int. Cl.: B62B 3/10

(54) **EINKAUFSWAGEN**
SHOPPING TROLLEY
CHARIOT POUR MAGASINS A LIBRE-SERVICE

(30) Priorität: 07.04.1993 DE 9305333 U; 09.07.1993 DE 9310234 U; 22.12.1993 DE 9319720 U
(43) Veröffentlichungstag der Anmeldung: 22.03.1995
(73) Patentinhaber: Wanzl GmbH & Co. Entwicklungs-KG, D-89336 Leipheim (DE)
(72) Erfinder: WANZL, Rudolf, D-89340 Leipheim (DE)
(86) Internationale Anmeldenummer: DE9400337
(87) Internationale Veröffentlichungsnummer: WO9422705

(56) Entgegenhaltungen:
- EP-A- 0 341 029
- DE-U- 8 526 713
- FR-A- 1 511 093
- GB-A- 2 043 552

## Beschreibung

Die Erfindung betrifft einen Einkaufswagen mit einem Fahrgestell, mit einer Schiebeeinrichtung und mit einem zur Aufnahme von Ware bestimmten korbartigen Behältnis, das vom Fahrgestell getragen wird, wobei das Fahrgestell und das korbartige Behältnis so gestaltet sind, daß sich gleiche Einkaufswagen platzsparend ineinanderschieben lassen und wobei das Behältnis durch einen am Fahrgestell befestigten, einen Boden, zwei Seitenwände und eine Rückwand aufweisenden Tragabschnitt und durch ein an den Tragabschnitt sich anschliessendes, vom Tragabschnitt getragenes, gegenüber der Rückwand angeordnetes Abschlußstück gebildet ist.

Ein Einkaufswagen dieser Art ist in der französischen Patentschrift 1.511.093 beschrieben. Bei diesem Einkaufswagen ist das Abschlußstück am Tragabschnitt gelenkig so befestigt, daß es sich um eine in der Ebene des Bodens befindliche horizontale Achse aus einer Nichtgebrauchslage, in welcher der Grundriß des Abschlußstückes einen Teil des Grundrisses des Tragabschnittes überdeckt, in eine Gebrauchslage bewegen läßt, in welcher das Abschlußstück beiträgt, das Volumen des korbartigen Behältnisses zu vergrößern. Der beschriebene Einkaufswagen ist relativ einfach gebaut und erfüllt nicht mehr jene Forderungen, die heutzutage an einen modernen Einkaufswagen gestellt werden. So wird inzwischen erwartet, daß die Körbe der Einkaufswagen mit einem Taschenhaken oder wenigstens mit einer Werbefläche oder mit einem Feld zur Wagenkennzeichnung ausstattbar sind. Ferner wünscht man sich Stoßfänger am Korb, die geeignet sind, beim Gebrauch der Einkaufswagen auftretende Stöße schadlos aufzunehmen. Auch wird vielfach gefordert, die Körbe der Einkaufswagen mit einer Zwischenwand oder mit einer Schale für Kleinartikel auszustatten. Schließlich wird seit neuem vorgeschlagen, die Einkaufswagen mit einem elektronischen Informationssystem zu versehen, um die Kunden beim Einkauf mit aktuellen Verkaufsinformationen versorgen zu können. In der Regel werden alle diese Einrichtungen als Einzelteile gefertigt und als Zubehör angeboten, was bedeutet, daß diese Einrichtungen immer zusätzlich an den Einkaufswagen angebracht werden müssen. Diese Art der Ausstattung von Einkaufswagen mit Zubehörteilen ist teuer.

Die Aufgabe der Erfindung besteht darin, bei einem Einkaufswagen der gattungsgemäßen Art eine Maßnahme vorzusehen, die es erlaubt, die Anzahl von einzeln am korbartigen Behältnis zu montierenden Zubehörteilen zu reduzieren.

Diese Maßnahme besteht erfindungsgemäß darin, daß das Abschlußstück als ein aus Kunststoff gefertigtes, ein oder mehrstückiges Bauteil gestaltet und ortsfest mit dem Tragabschnitt verbunden ist.

Der besondere Vorteil der Erfindung besteht darin, daß das Abschlußstück aus Kunststoff gestaltet ist. Dadurch ist es möglich, bereits beim Spritzvorgang dieses Kunststoffteiles die verschiedensten zweckmäßigen Einrichtungen vorzusehen. So können beispielsweise Vertiefungen oder Führungen zur Aufnahme eines blattförmigen Werbeträgers oder eines Kennzeichnungsschildes angeformt werden. Ebenso ist es möglich, eine Aufnahme für einen stirnseitig anzubringenden Taschenhaken zu berücksichtigen. Selbst das Ausformen einer Vertiefung zur Bildung einer Kleinartikelschale oder das Vorsehen eines Durchbruches, um eine Griffeinrichtung zum Ziehen des Einkaufswagens zu erhalten, ist machbar. Auch können an den Innenwänden des Abschlußstückes vertikale Führungen zur Aufnahme einer im vorderen Bereich des korbartigen Behältnisses anbringbaren Trennwand angespritzt werden. Ferner lassen sich am Abschlußstück Prallflächen oder Zonen vorsehen, die zur Verminderung der Beschädigung an Ladenmöbeln beitragen. Schließlich ist es in äußerst zweckmäßiger Weise möglich, etwa ein elektronisches Informationssystem, beispielsweise einen Bildschirm mit Lautsprecher oder andere elektronische Bauelemente, die den Einkaufsvorgang oder die Überwachung von Einkaufswagen ermöglichen, im Abschlußstück einzusetzen oder einzuspritzen.
Das Abschlußstück ist bevorzugt einstückig gestaltet. Es ist in zweckmäßiger Weise jedoch auch möglich, das Abschlußstück aus wenigstens zwei, ebenfalls aus Kunststoff bestehenden Teilen zu bilden, wobei diese Teile zu einem Bauteil zusammengesteckt werden. Eine derartige Lösung empfiehlt sich beispielsweise dann, wenn die Stirnseite des Abschlußstückes unterschiedlich so gestaltet sein soll, daß den verschiedensten Anforderungen Rechnung getragen werden kann. So ist es durchaus möglich, die Stirnseite des Abschlußstückes mit einem größeren Ausschnitt zu versehen, in welchen dann wahlweise unterschiedlich gestaltete Teilstücke gegen unbefugtes Lösen gesichert einsetzbar sind. Diese Teilstücke können mit dem erwähnten elektronischen Informationssystem oder mit der Kleinartikelschale und/oder mit anderen geeigneten nützlichen Einrichtungen ausgestattet sein. Baukastenartig lassen sich dann in vorteilhafter Weise Einkaufswagen herstellen, deren Abschlußstücke unterschiedliche, den Einkaufsvorgang fördernde, unterstützende oder beeinflussende Einrichtungen aufweisen.

Die Erfindung wird anhand mehrerer Ausführungsbeispiele näher erläutert. Es zeigt
Fig. 1 einen Einkaufswagen der gattungsgemäßen Art;
Fig. 2 den vorderen Bereich des korbartigen Behältnisses;
Fig. 3 ausschnittweise eine der Möglichkeiten, wie das Abschlußstück am Tragabschnitt befestigbar ist;
Fig. 4 ein Abschlußstück mit einem aufsetzbaren Taschenhaken;
Fig. 5 den vorderen Bereich des Abschlußstückes mit Vertiefungen zur Aufnahme eines blattförmigen Werbeträgers;
Fig. 6 eine weitere Möglichkeit, einen Taschenhaken vorzusehen;
Fig. 7 einen Einkaufswagen mit einem elektronischen Informationssystem;
Fig. 8 ein Abschlußstück mit einer Kleinartikelschale sowie
Fig. 9 ein aus zwei Teilen bestehendes Abschlußstück.

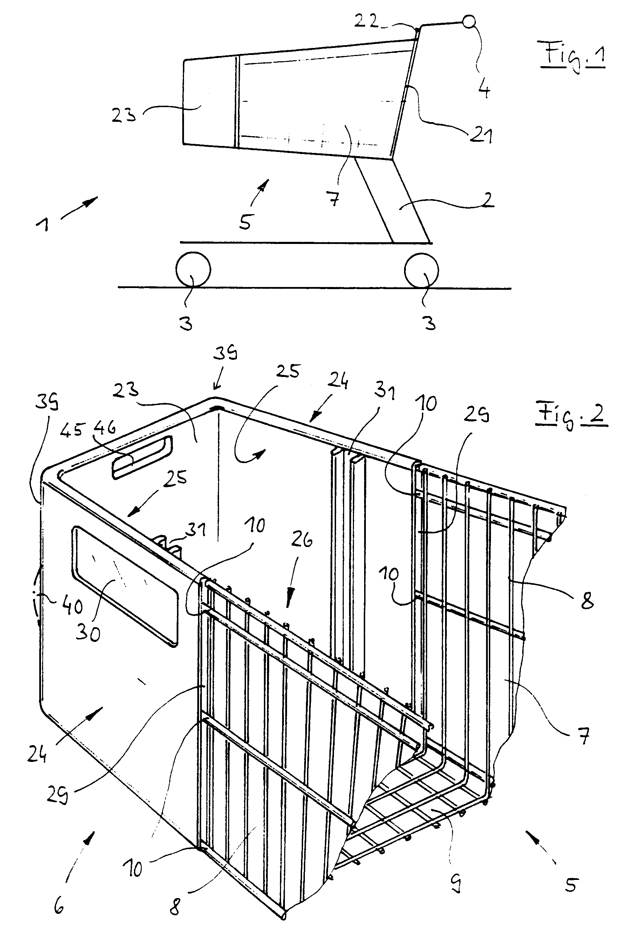

Der in Fig. 1 dargestellte Einkaufswagen 1 steht stellvertretend für die vielen Sorten von Einkaufswagen 1, die von der Erfindung erfaßbar sind. Alle diese Einkaufswagen 1 weisen ein Fahrgestell 2 mit gewöhnlich vier Fahrrollen 3 auf. Das Fahrgestell 2 trägt ein korbartiges Behältnis 5. Eine Schiebeeinrichtung 4 ist entweder am Fahrgestell 2 oder am korbartigen Behältnis 5 vorgesehen. Sowohl das Fahrgestell 2, als auch das korbartige Behältnis 5 sind in bekannter Weise in Schieberichtung des Einkaufswagens 1 sich verjüngend so gestaltet, daß sich mehrere gleiche Einkaufswagen 1 platzsparend ineinanderschieben lassen. Das korbartige Behältnis 5 besteht aus einem Tragabschnitt 7, der am Fahrgestell 2 in bekannter und deshalb nicht näher beschriebener Weise befestigt ist. Mit dem Tragabschnitt 7 ist ein Abschlußstück 23 ortsfest so verbunden, daß es das vordere Ende des korbartigen Behältnisses 5 bildet. Während der Tragabschnitt 7 gewöhnlich als übliche Drahtgitterkonstruktion gestaltet ist, die durchaus aus Kunststoff gefertigte Einzelheiten aufweisen oder sogar ganz aus Kunststoff gefertigt sein kann, ist das Abschlußstück komplett aus Kunststoff hergestellt.

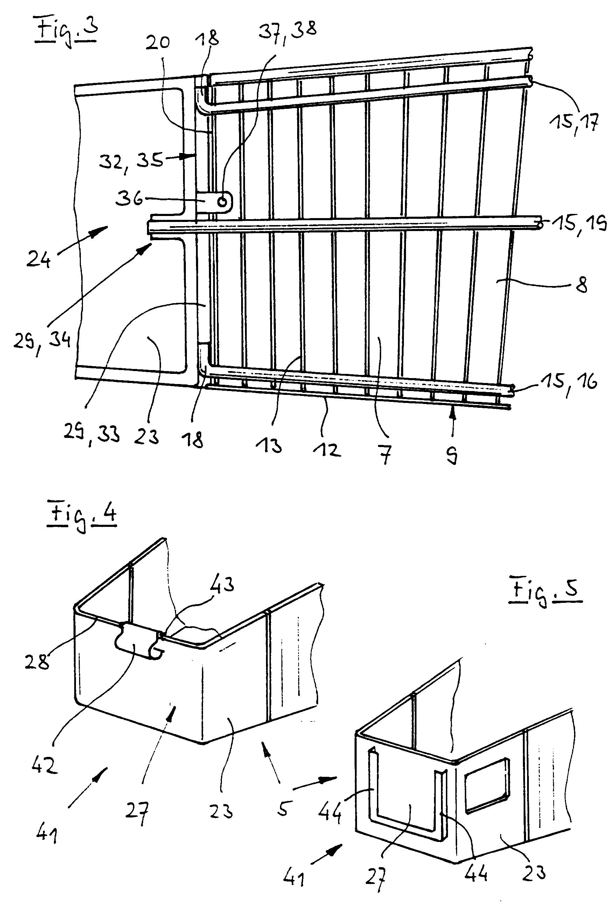

Fig. 2 zeigt den vorderen Bereich 6 des ausschnittweise dargestellten korbartigen Behältnisses 5. Man erkennt den Tragabschnitt 7, an dem das Abschlußstück 23 befestigt ist. Der Tragabschnitt 7 weist zwei Seitenwände 8 sowie einen Boden 9 auf. Die Seitenwände 8 sind nahe der im Beispiel am korbartigen Behältnis 5 angebrachten Schiebeeinrichtung 4 durch eine quer zur Schieberichtung des Einkaufswagens 1 angeordnete Rückwand 21 in Form einer Klappe, siehe Fig. 1, begrenzt, die in bekannter Weise um eine oben liegende horizontale Achse 22 schwenkbar so gelagert ist, daß sie sich nach oben in das Innere des korbähnlichen Behältnisses 5 verschwenken läßt. Dies erlaubt ein Ineinanderschieben mehrerer gleicher Einkaufswagen 1 dann, wenn sich die korbartigen Behältnisse 5 der Einkaufswagen 1 nach vorne in Schieberichtung verjüngen. Wie in Fig. 3 näher beschrieben, sind am Tragabschnitt 7, insbesondere an dessen Seitenwände 8, Vorsprünge 10 vorgesehen, die in am Abschlußstück 23 angeordnete Vertiefungen 29 eingreifen und dadurch eine ortsfeste Befestigung des Abschlußstückes 23 am Tragabschnitt 7 ermöglichen. An den Seitenwänden 24 des ebenfalls in Schieberichtung sich verjüngenden Abschlußstückes 23 kann eine Einrichtung in Form von wenigstens einer Vertiefung 30 zum Aufkleben von Werbeträgern oder zum Einsetzen eines Kennzeichnungsschildes vorgesehen sein. An den Innenseiten 25 der Seitenwände 24 des Abschlußstückes 23 können je eine senkrecht angeordnete Nut 31 zur Aufnahme einer bekannten, nicht näher dargestellten, in den Nuten 31 geführten Trennwand vorgesehen sein, wobei es sich empfiehlt, die Nuten 31 nach unten hin so zu begrenzen, daß der untere Rand einer in den Nuten 31 geführten Trennwand nicht am Boden 26 des Abschlußstückes 23 aufliegt. Dies hat den Vorteil, daß, sollte Flüssigkeit aus einem zu transportierenden Gut auslaufen, diese nicht von der Trennwand zurückgehalten wird. Auch beim Reinigen der korbartigen Behältnisse 5 ist diese Maßnahme von Nutzen. Neben der eben erwähnten Einrichtung ist es ferner möglich, an den beiden vorderen Kanten 39 des Abschlußstückes 23 Erhöhungen 40 vorzusehen, welche die Funktion von Stoßfängern übernehmen. An der Stirnwand 27 des Abschlußstückes 23 kann eine weitere Einrichtung in Form einer Öffnung 45 vorgesehen sein, um einen Griffabschnitt 46 zum Ziehen des Einkaufswagens 1 zu bilden.

In Seitenansicht und teilweise geschnitten zeigt Fig. 3 eine Möglichkeit, wie in zweckmäßiger Weise das Abschlußstück 23 mit dem Tragabschnitt 7 ortsfest verbunden werden kann. Wie bereits erwähnt, ist der Tragabschnitt 7 in bevorzugter Weise als Gitterkonstruktion gestaltet, wie man dies beispielsweise von den üblichen Drahtkörben bei Einkaufswagen 1 her kennt. Der Tragabschnitt 7 ist aus Längs- und Querdrähten 12, 13 gefertigt und U-förmig, also mit einem Boden 9, an den sich zu beiden Seiten je eine Seitenwand 8 anschließt, gestaltet. Die in der Regel dünneren Querdrähte 13 kreuzen sich im Bereich der Seitenwände 8 bevorzugt mit dickeren Längsdrähten 15, und im Bereich des Bodens 9 mit bevorzugt gleich dicken Längsdrähten 12. Sowohl ein unterer (16), als auch ein oberer Längsdraht 17 ragen an jeder Seitenwand 8 nach vorne über den Tragabschnitt 7 hinaus, sind nach oben abgebogen und mit den so gebildeten Haken 18 schnappschlüssig in je eine am freien Rand 32 des Abschlußstückes 23 und an dessen Seitenwänden 24 befindliche Vertiefung 29 in Form einer Nut 33 ortsfest eingefügt. Je ein mittlerer Längsdraht 19 führt ebenfalls ausgehend von den Seitenwänden 8 des Tragabschnittes 7 über die vordere Begrenzung des Tragabschnittes 7 hinaus in je eine an den Seitenwänden 8 vorgesehene Vertiefung 29 in Form einer horizontalen Öffnung 34. Die Längsdrähte 19 sind formschlüssig in die Öffnungen 34 eingefügt, so daß sich das Abschlußstück 23 entlang der Haken 18 nicht mehr nach oben und unten bewegen läßt. Damit das Abschlußstück 23 nicht nach vorne vom Tragabschnitt 7 gezogen werden kann, empfiehlt es sich, an beiden freien senkrechten Kanten 35 des Abschlußstückes 23 je zwei vorspringende Laschen 36 anzuformen, wobei die paarweisen Laschen 36 je einen gemeinsamen Durchbruch 37 aufweisen, durch den jeweils ein Stift 38 ortsfest einfügbar ist. Jeder Stift 38 liegt am vordersten Querdraht 20 des Tragabschnittes 7 so an, daß sich die Querdrähte 20 näher an den beiden Nuten 33 befinden, als die Stifte 38. Die Stifte 38 hintergreifen somit die Querdrähte 20, also einen Teil des Tragabschnittes 7, so daß das Abschlußstück 23 nicht nach vorne vom Tragabschnitt 7 abgezogen werden kann. Damit ist eine ortsfeste Arretierung oder Befestigung des Abschlußstückes 23 am Tragabschnitt 7 erreicht.

Eine weitere, jedoch zeichnerisch nicht dargestellte Möglichkeit, das Abschlußstück 23 am Tragabschnitt 7 ortsfest zu befestigen, besteht darin, anstelle der winklig abgebogenen Längsdrähte 16 und 17, an den Seitenwänden 14 und am Boden 9 ebenfalls solche Längsdrähte vorzusehen, die kurz über das vordere offene Ende des Tragabschnittes 7 hinausgeführt sind, dann jedoch um 180° abgebogen sind und wieder zu den Seitenwänden 14 und dem Boden 9 zurückkehren und mit den Querdrähten 13 verschweißt sind. Die dadurch gebildeten Ösen führen in an den Seitenwänden 24 und dem Boden 26 des Abschlußstückes 23 führende Öffnungen oder Vertiefungen 29. In jeder Vertiefung 29 befindet sich eine federnde Zunge. Jede Zunge ist zum Eingriff in eine Öse bestimmt. Bei der Montage des Abschlußstückes 23 auf den Tragabschnitt 7 wird das Abschlußstück 23 paßgenau gegen den Tragabschnitt 7 gedrückt; die Zungen werden von den Ösen zur Seite bewegt und rasten anschließend schnappschlüssig in die Ösen ein. Diese zweckmäßige Art der Befestigung kommt ohne zusätzliche Befestigungsmittel 38 aus.

Während bisher bevorzugt die Gestalt sowie die Anordnung und Befestigung des Abschlußstückes 23 am Einkaufswagen 1 beschrieben wurden, zeigen die nachfolgenden Ausführungsbeispiele weitere zeckmäßige und erfindungswesentliche Einrichtungen, die am Abschlußstück 23 vorgesehen sein können. Diese Einrichtungen dienen, wie auch die bereits erwähnten dazu, den Einkaufsvorgang zu fördern, zu unterstützen oder zu beeinflussen.

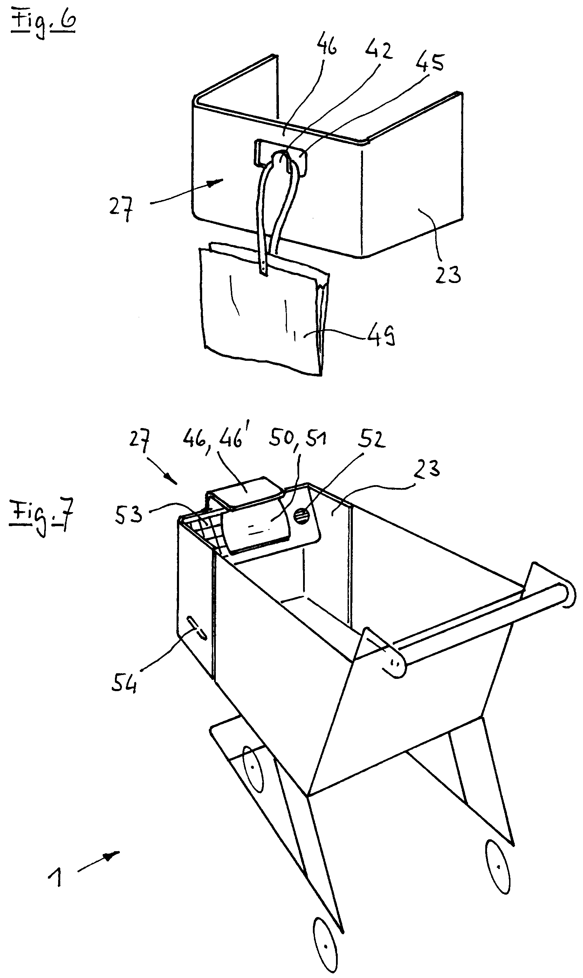

Fig. 4 zeigt den vorderen Bereich 41 des Abschlußstückes 23. Am oder nahe des oberen Randes 28 der Stirnwand 27 ist ein hakenförmiges, als sog. Taschenhaken 42 gestaltetes Teil um eine horizontale Achse 43 schwenkbar gelagert eingesetzt. An dieser Einrichtung lassen sich z.B. Einkaufstaschen am korbartigen Behältnis 5 anhängen.

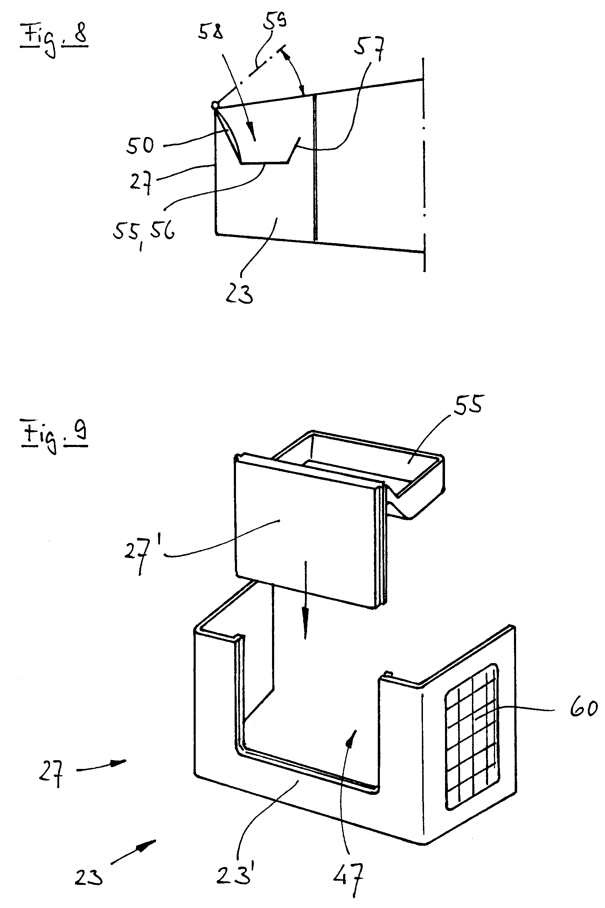

Ebenfalls den vorderen Bereich 41 des Abschlußstückes 23 zeigt Fig. 5. An der Außenseite, wahlweise auch an der Innenseite der Stirnwand 27 können bekannte, nicht näher dargestellte Führungen 44, Vertiefungen, Hinterschneidungen oder ähnliches vorgesehen sein, die zum Halten eines blattförmigen Werbeträgers, beispielsweise eines Schildes aus Karton, bestimmt sind. Diese Einrichtung ermöglicht es, an den Kunden gerichtete Werbung zu betreiben.

Anstelle einer Einrichtung in Form eines aufsetzbaren Taschenhakens 42, wie in Fig. 4 beschrieben, kann auch gemäß Fig. 6 ein Taschenhaken 42 vorgesehen sein, der an der Stirnwand 27 des Abschlußstückes 23 angeformt ist. Zu diesem Zweck ist eine Öffnung 45 vorgesehen, in welcher der Taschenhaken 42 vorgesehen ist und nach oben einen Zwischenraum entstehen läßt, damit eine Tasche eingehängt werden kann. Auch bei diesem Ausführungsbeispiel ist ein Griffabschnitt 46 gebildet, wie in Fig. 2 geschildert. Im Beispiel ist eine am Taschenhaken 42 eingehängte Tasche 49 eingezeichnet.

Fig. 7 zeigt einen Einkaufswagen 1, bei dem an der Innenseite der Stirnwand 27 des Abschlußstückes 23 eine Einrichtung in Form eines mit einem Bildschirm 51 ausgestatteten Informationssystems 50 eingefügt ist. Oberhalb des Bildschirmes 51 kann am Abschlußstück 23 in zweckmäßiger Weise eine weitere Einrichtung in Form eines Blendschutzes 46' angeformt sein, so daß die auf dem Bildschirm 51 gezeigte Information besser erkennbar ist. Der Blendschutz 46' kann gleichzeitig als Griffabschnitt 46 gestaltet sein, mit dem sich der Einkaufswagen 1 ziehen läßt. Zum Informationssystem 50 gehören der Bildschirm 51, bevorzugt ein Lautsprecher 52, sowie eine Stromversorgungseinrichtung 53, die beispielsweise durch Solarzellen, Batterien oder andere am Einkaufswagen 1 vorgesehene Stromquellen gebildet ist. Das Informationssystem 50 ist in bekannter Weise durch Funk, Infrarot oder durch Strom ansteuerbar, wobei die nicht dargestellte Ansteuerungsvorrichtung entweder außerhalb des Einkaufswagens 1, also extern, oder ebenfalls im Abschlußstück 23 untergebracht ist. Eine weitere Ansteuerungseinrichtung 54 kann aber auch unabhängig von der Existenz eines Informationssystems 50 im Abschlußstück 23 eingesetzt oder eingespritzt sein. Solche Ansteuerungseinrichtungen 54, in Fachkreisen auch "Transponder" genannt, sind Empfangs- und Sendeeinheiten, die als passive, bevorzugt auf Radiocontrol (RC-Basis) arbeitende Bauteile gestaltet und nur wenige Millimeter groß sind. Mit Ansteuerungseinrichtungen 54 ausgestattete Einkaufswagen 1 lassen sich leicht orten, so daß es möglich ist, beispielsweise den Weg, den ein Einkaufswagen 1 durch einen Markt genommen hat, zu verfolgen oder nahe des Selbstbedienungsgeschäftes wahllos abgestellte Einkaufswagen 1 wieder aufzufinden.

Im Ausführungsbeispiel gemäß Fig. 8 wird gezeigt, daß an das Abschlußstück 23 eine Einrichtung in Form einer Kleinartikelschale 55 angeformt sein kann, die an das Informationssystem 50 sich anschließend und von dessen unterem Rand ausgehend, als ein zur Rückseite des Einkaufswagens 1 sich erstreckender Boden 56 gestaltet ist, an den sich eine nach oben gerichtete Wand 57 anschließt. Die so gebildete Kleinartikelschale 55 durchmißt bevorzugt die Breite des Abschlußstückes 23. Wird auf ein Informationssystem 50 verzichtet, ist die Kleinartikelschale 55 direkt an die Innenseite der Stirnwand 27 des Abschlußstückes 23 angeformt. Das Innere der Kleinartikelschale 55 oder ganz allgemein ein Raum 58, der auch durch das Anbringen einer Trennwand vgl. Fig. 2, gebildet sein kann, läßt sich durch einen Deckel 59 verschließen, wobei zusätzlich eine Schließeinrichtung vorgesehen sein kann. Wertvolle Artikel oder eigene Wertsachen können darin eingeschlossen werden.

Fig. 9 zeigt ein Abschlußstück 23, das aus zwei aus Kunststoff gefertigten Teilen 23', 27' besteht. Die Stirnwand 27 des Abschlußstückes 23 ist mit einem Ausschnitt 47 versehen, in welchen ein weiteres Teil möglichst paßgenau einsetz- und so arretierbar ist, daß dieses ohne Zuhilfenahme von geeignetem Werkzeug nicht vom Abschlußstück 23 abnehmbar ist. Das im Beispiel als Steckteil 27' bezeichnete Teil kann mit den unterschiedlichsten Einrichtungen ausgestattet sein, insbesondere mit solchen, die bisher genannt wurden. Während das mit dem Ausschnitt 47 versehene Abschlußteil 23' gewöhnlich immer gleich bleibt, sind die Steckteile 27' unterschiedlich gestaltet. Lediglich jene Bereiche der Steckteile 27', die mit dem Abschlußteil 23' zusammenpassen müssen, bleiben gleich. So kann das eine Steckteil 27' beispielsweise nur einen Taschenhaken 42 aufweisen, das andere Steckteil 27' wiederum mit einem Taschenhaken 42 und einer Kleinartikelschale 55 ausgestattet sein. Ein weiteres Steckteil 27' kann das erwähnte Informationssystem 50 aufweisen, während ein viertes Steckteil 27' mit einer Ansteuerungseinrichtung 54 bestückt sein kann. Diese Beispiele sollen zeigen, daß es durch die Erfindung möglich ist, die Abschlußstücke 23 bezogen auf ihr jeweiliges Einsatzgebiet, unterschiedlich oder kombinativ, also mit verschiedenen Einrichtungen ausgestattet, zu gestalten. Dabei ist es durchaus denkbar, das Abschlußstück 23 sogar aus mehr als zwei Teilen zu gestalten, die alle unter Verwendung bekannter Hilfsmittel wie Nuten, Hinterschneidungen oder schnappschlüssigen Verrastungen auf einfache Weise zusammensteckbar und wahlweise mit zusätzlichen Sicherungsmitteln wie Schrauben, Nieten usw. gegen unbefugtes Lösen gesichert sind.

Es soll nicht unerwähnt bleiben, daß das Abschlußstück 23, zumindest bei einfachen Ausführungsformen auch ohne Boden 26 und Seitenwänden 24 gestaltet sein kann. Wichtig ist, daß das Abschlußstück 23 die vordere, der Rückwand 21 gegenüber gelegene offene Seite des Tragstückes 7 verschließt. Ferner ist anzumerken, daß das ein- oder mehrteilige Abschlußstück 23 auch wengistens eine gitterförmige Zone (60) aufweisen kann, damit es einer Kassiererin in einem Selbstbedienungsgeschäft ermöglicht wird, zu prüfen, ob sich im Bereich des Abschlußstückes 23 Ware befindet. Im Ausführungsbeispiel gemäß Fig. 9 sind solche Zonen (60) angedeutet.

## Patentansprüche

1. Einkaufswagen (1) mit einem Fahrgestell (2), mit einer Schiebeeinrichtung (4) und mit einem zur Aufnahme von Ware bestimmten korbartigen Behältnis (5), das vom Fahrgestell getragen wird, wobei das Fahrgestell und das korbartige Behältnis so gestaltet sind, daß sich gleiche Einkaufswagen platzsparend ineinanderschieben lassen und wobei das Behältnis durch einen am Fahrgestell befestigten, einen Boden (9), zwei Seitenwände (8) und eine Rückwand (21) aufweisenden Tragabschnitt (7) und durch ein an den Tragabschnitt sich anschließendes, vom Tragabschnitt (7) getragenes, gegenüber der Rückwand (21) angeordnetes Abschlußstück (23) gebildet ist, dadurch **gekennzeichnet,** daß das Abschlußstück (23) als ein aus Kunststoff gefertigtes, ein- oder mehrstückiges Bauteil gestaltet und ortsfest mit dem Tragabschnitt (7) verbunden ist.

2. Einkaufswagen nach Anspruch 1, dadurch **gekennzeichnet,** daß der Tragabschnitt (7) und das Abschlußstück (23) schnappschlüssig verbunden sind.

3. Einkaufswagen nach einem der Ansprüche 1 oder 2, dadurch **gekennzeichnet,** daß am Tragabschnitt (7) Vorsprünge (10) und am Abschlußstück (23) Vertiefungen (29) vorgesehen sind und daß die Vorsprünge (10), um eine ortsfeste oder schnappschlüssige Verbindung zu bilden, in die Vertiefungen (29) eingreifen.

4. Einkaufswagen nach einem der Ansprüche 1 bis 3, dadurch **gekennzeichnet,** daß das Abschlußstück (23) wenigstens eine den Einkaufsvorgang fördernde, unterstützende oder beeinflussende Einrichtung aufweist.

5. Einkaufswagen nach einem der Ansprüche 1 bis 4, dadurch **gekennzeichnet,** daß die Einrichtung an der Stirnwand (27) des Abschlußstückes (23) vorgesehen ist und in Form einer Öffnung (45) zur Bildung eines Griffabschnittes (46) gestaltet ist.

6. Einkaufswagen nach einem der Ansprüche 1 bis 5, dadurch **gekennzeichnet,** daß die Einrichtung als ein an der Stirnwand (27) aufsteckbarer oder ein an der Stirnwand (27) angeformter Taschenhaken (42) gestaltet ist.

7. Einkaufswagen nach einem der Ansprüche 1 bis 6, dadurch **gekennzeichnet,** daß die Einrichtung am Abschlußstück (23) in Form von wenigstens einer Vertiefung (30) zum Anbringen von Werbeträgern oder eines Kennzeichnungsschildes ausgebildet ist.

8. Einkaufswagen nach einem der Ansprüche 1 bis 7, dadurch **gekennzeichnet,** daß die Einrichtung an der Stirnwand (27) des Abschlußstückes (23) in Form von Führungen (44), Hinterschneidungen oder ähnliches gestaltet ist, die zum Halten eines blattförmigen Werbeträgers bestimmt sind.

9. Einkaufswagen nach einem der Ansprüche 1 bis 8, dadurch **gekennzeichnet,** daß die Einrichtung die Form einer Kleinartikelschale (55) aufweist und am Abschlußstück (23) angeformt ist.

10. Einkaufswagen nach einem der Ansprüche 1 bis 9, dadurch **gekennzeichnet,** daß die Einrichtung als Informationssystem (50) ausgebildet ist, wobei das Informationssystem (50) einen Bildschirm (51) aufweist und mit einem Lautsprecher (52) ausgestattet sein kann.

11. Einkaufswagen nach einem der Ansprüche 1 bis 10, dadurch **gekennzeichnet,** daß der Griffabschnitt (46) als Blendschutz (46') für den Bildschirm (51) bestimmt ist.

12. Einkaufswagen nach einem der Ansprüche 1 bis 11, dadurch **gekennzeichnet,** daß die für das Informationssystem (50) erforderliche Stromversorgungseinrichtung (53) im Abschlußstück (23) untergebracht ist.

13. Einkaufswagen nach einem der Ansprüche 1 bis 12, dadurch **gekennzeichnet,** daß die Einrichtung in Form einer als Transponder gestalteten Ansteuerungseinrichtung (54) ausgebildet ist, die durch eine bevorzugt extern angeordnete Ansteuerungsvorrichtung ansteuerbar ist.

14. Einkaufswagen nach einem der Ansprüche 1 bis 13, dadurch **gekennzeichnet,** daß das Abschlußstück (23) einen Boden (26) und zwei Seitenwände (24) aufweist.

15. Einkaufswagen nach einem der Ansprüche 1 bis 14, dadurch **gekennzeichnet,** daß die Einrichtung an den Innenseiten (25) der Seitenwände (24) in Form von je einer senkrechten Nut (31) zur Aufnahme einer Trennwand gestaltet ist.

16. Einkaufswagen nach einem der Ansprüche 1 bis 15, dadurch **gekennzeichnet,** daß die Kleinartikelschale (55) oder der durch die Trennwand und durch das Abschlußstück (23) gebildete Raum (58) durch einen Deckel (59) verschließbar ist.

17. Einkaufswagen nach einem der Ansprüche 1 bis 16, dadurch **gekennzeichnet,** daß die Einrichtung in Form von wenigstens einer gitterförmigen Zone (60) ausgebildet ist.

## Claims

1. A shopping trolley (1) with a chassis (2), and having pushing means (4) and a basket-like container (5) intended for receiving goods and supported by the chassis, wherein the chassis and the basket-like container are shaped in such a manner that identical shopping trolleys can be pushed into each other to save space and wherein the container is formed by a supporting section (7) secured to the chassis and having a bottom (9), two side walls (8) and a rear wall (21) and by a closing part (23) arranged opposite the rear wall (21) and supported by and attached to the supporting section (7), **characterised in that** the closing part (23) is formed as an integral or multipart component and made of plastic, and is fixedly connected to the supporting section (7).

2. A shopping trolley according to Claim 1, **characterised in that** the supporting section (7) and the closing part (23) are connected by a spring catch.

3. A shopping trolley according to Claim 1 or 2, **characterised in that** projections (10) are provided on the supporting section (7) and recesses (29) on the closing part (23), and the projections (10) engage in the recesses (29) to form a fixed or spring-catch connection.

4. A shopping trolley according to any one of Claims 1 to 3, **characterised in that** the closing part (23) has at least one means aiding, supporting or affecting shopping.

5. A shopping trolley according to any one of Claims 1 to 4, **characterised in that** the means is provided on the end wall (27) of the closing part (23), and is in the shape of an opening (45) for forming a handle section (46).

6. A shopping trolley according to any one of Claims 1 to 5, **characterised in that** the means is shaped as a bag hook (42) moulded to or mountable on the end wall (27).

7. A shopping trolley according to any one of Claims 1 to 6, **characterised in that** the means is constructed on the closing part (23) in the form of at least one recess (30) for mounting advertising media or an identification plate.

8. A shopping trolley according to any one of Claims 1 to 7, **characterised in that** the means is constructed on the end wall (27) of the closing part (23) in the form of guides (44), undercuts or the like intended to hold sheet-like advertising medium.

9. A shopping trolley according to any one of Claims 1 to 8, **characterised in that** the means has the shape of a tray (55) for small articles and is integrally moulded to the closing part (23).

10. A shopping trolley according to any one of Claims 1 to 9, **characterised in that** the means is constructed as an information system (50), wherein the information system (50) has a screen (51) and can be equipped with a loudspeaker (52).

11. A shopping trolley according to any one of Claims 1 to 10, **characterised in that** the handle section (46) is intended to be an antiglare device (46') for the screen (51).

12. A shopping trolley according to any one of Claims 1 to 11, **characterised in that** the current supply means (53) required for the information system (50) is housed in the closing part (23).

13. A shopping trolley according to any one of Claims 1 to 12, **characterised in that** the means is constructed in the form of triggering means (54) designed as a transponder and triggerable by a triggering device preferably arranged externally.

14. A shopping trolley according to any one of Claims 1 to 13, **characterised in that** the closing part (23) has a bottom (26) and two side walls (24).

15. A shopping trolley according to any one of Claims 1 to 14, **characterised in that** the means on the inside (25) of the side walls (24) is constructed in the form of a respective vertical groove (31) for receiving a partition wall.

16. A shopping trolley according to any one of Claims 1 to 15, **characterised in that** the tray (55) for small articles or the space (58) formed by the partition wall and by the closing part (23) is closable by a cover (59).

17. A shopping trolley according to any one of Claims 1 to 16, **characterised in that** the means is constructed in the form of at least one grid-like zone (60).

## Revendications

1. Chariot à provisions (1) comprenant un châssis de roulement (2), un dispositif (4) destiné à pousser le chariot et un réceptacle en forme de panier (5) qui est destiné à recevoir des marchandises et qui est porté par le châssis de roulement, cependant que le châssis de roulement et le réceptacle en forme de panier sont conformés d'une manière telle que des chariots à provisions identiques puissent être poussés les uns dans les autres pour économiser de la place, et cependant que le réceptacle est constitué par une partie porteuse (7) qui est fixée au châssis de roulement et qui comporte un fond (9), deux parois latérales (8) et une paroi arrière (21), et par un élément de fermeture (23) qui se raccorde à la partie porteuse, qui est porté par la partie porteuse (7) et qui est disposé en face de la paroi arrière (21), caractérisé par le fait que l'élément de fermeture (23) est réalisé sous la forme d'un élément constitutif en une ou en plusieurs parties qui est fabriqué en matière plastique, et qu'il est relié rigidement à la partie porteuse (7).

2. Chariot à provisions selon la revendication 1, caractérisé par le fait que la partie porteuse (7) et l'élément de fermeture (23) sont reliés par encliquetage.

3. Chariot à provisions selon l'une des revendications 1 et 2, caractérisé par le fait qu'il est prévu des parties en saillie (10) sur la partie porteuse (7) et des renfoncements (29) sur l'élément de fermeture (23), et par le fait que les parties en saillie (10) pénètrent dans les renfoncements (29) pour former une liaison rigide ou par encliquetage.

4. Chariot à provisions selon l'une des revendications 1 à 3, caractérisé par le fait que l'élément de fermeture (23) comporte au moins un dispositif pour promouvoir, aider ou influencer l'opération d'achat.

5. Chariot à provisions selon l'une des revendications 1 à 4, caractérisé par le fait que le dispositif est prévu sur la paroi frontale (27) de l'élément de fermeture (23), et qu'il est réalisé sous la forme d'une ouverture (45) destinée à constituer une partie de préhension (46).

6. Chariot à provisions selon l'une des revendications 1 à 5, caractérisé par le fait que le dispositif est réalisé sous la forme d'un crochet porte-sacs (42) qui peut être enfoncé sur la paroi frontale (27) ou formé sur la paroi frontale (27).

7. Chariot à provisions selon l'une des revendications 1 à 6, caractérisé par le fait que le dispositif est réalisé sur l'élément de fermeture (23) sous la forme d'au moins un renfoncement (30) qui est destiné à la pose de supports publicitaires ou d'un panneau de marquage.

8. Chariot à provisions selon l'une des revendications 1 à 7, caractérisé par le fait que le dispositif est réalisé sur la paroi frontale (27) de l'élément de fermeture (23) sous la forme de guidages (44), de contre-dépouilles ou similaires qui sont destinées à retenir un support publicitaire en forme de feuille.

9. Chariot à provisions selon l'une des revendications 1 à 8, caractérisé par le fait que le dispositif présente la forme d'une poche à petits objets (55), et qu'il est formé sur l'élément de fermeture (23).

10. Chariot à provisions selon l'une des revendications 1 à 9, caractérisé par le fait que le dispositif est réalisé sous la forme d'un système d'information (50), le système d'information (50) comportant un écran (51) et pouvant être équipé d'un haut-parleur (52).

11. Chariot à provisions selon l'une des revendications 1 à 10, caractérisé par le fait que la partie formant poignée (46) est destinée à servir de protection antireflet (46') à l'écran (51).

12. Chariot à provisions selon l'une des revendications 1 à 11, caractérisé par le fait que le dispositif d'alimentation en courant (53) qui est nécessaire au système d'information (50) est logé dans l'élément de fermeture (23).

13. Chariot à provisions selon l'une des revendications 1 à 12, caractérisé par le fait que le dispositif est réalisé sous la forme d'un dispositif de commande (54) qui est conformé comme un transpondeur et qui peut être commandé par un dispositif de commande, de préférence disposé à l'extérieur.

14. Chariot à provisions selon l'une des revendications 1 à 13, caractérisé par le fait que l'élément de fermeture (23) comporte un fond (26) et deux parois latérales (24).

15. Chariot à provisions selon l'une des revendications 1 à 14, caractérisé par le fait que le dispositif est réalisé sur les côtés intérieurs (25) des parois latérales (24) sous la forme à chaque fois d'une rainure verticale (31) qui est destinée à recevoir une paroi de séparation.

16. Chariot à provisions selon l'une des revendications 1 à 15, caractérisé par le fait que la poche à petits objets (55) ou l'espace (58) qui est formé par la paroi de séparation et par l'élément de fermeture (23) peut être fermé par un couvercle (59).

17. Chariot à provisions selon l'une des revendications 1 à 16, caractérisé par le fait que le dispositif est réalisé sous la forme d'au moins une zone en forme de grille (60).
